# FASCICULE DE BREVET EUROPEEN

(11) **EP 1 672 877 B1**
(45) Date de publication et mention de la délivrance du brevet: **09.02.2011**
(21) Numéro de dépôt: 05300995.7
(22) Date de dépôt: 02.12.2005
(51) Int. Cl.: H04L 29/12, H04L 29/06

(54) **Dispositif d'attribution dynamique de préfixes de longueurs variables pour des équipements de réseau d'un réseau IP**
Vorrichtung zur dynamischen Zuweisung von Präfixen unterschiedlicher Länge zu Netzwerkvorrichtungen eines IP-Netzwerkes.
Device for dynamically allocating variable length prefixes to network equipments of an IP-network.

(30) Priorité: 20.12.2004 FR 0453092
(43) Date de publication de la demande: 21.06.2006
(73) Titulaire: Alcatel Lucent, 75008 Paris (FR)
(72) Inventeur: Bras, Gwenael, 75015 Paris (FR); Clevy, Laurent, 28000 Chartes (FR)
(74) Mandataire: Chaffraix, Sylvain

(56) Documents cités:
- US-A1- 2003 182 445
- TROAN R DROMS CISCO SYSTEMS O: "IPv6 Prefix Options for Dynamic Host Configuration Protocol (DHCP) version 6" IETF STANDARD, INTERNET ENGINEERING TASK FORCE, IETF, CH, décembre 2003 (2003-12), XP015009415 ISSN: 0000-0003
- BYUNG-YEOB KIM KYEONG-JIN LEE JUNG-SOO PARK HYOUNG-JUN KIM ETRI: "Hierarchical Prefix Delegation Protocol for Internet Protocol Version 6 (IPv6)" IETF STANDARD-WORKING-DRAFT, INTERNET ENGINEERING TASK FORCE, IETF, CH, no. 1, 15 février 2004 (2004-02-15), XP015011290 ISSN: 0000-0004
- TJ KNIVETON NOKIA P THUBERT CISCO: "Mobile Network Prefix Delegation" IETF STANDARD-WORKING-DRAFT, INTERNET ENGINEERING TASK FORCE, IETF, CH, 15 octobre 2004 (2004-10-15), XP015031056 ISSN: 0000-0004

## Description

L'invention concerne les réseaux de communication à protocole Internet (IP), et plus particulièrement les dispositifs chargés d'allouer les préfixes des équipements de réseau, comme par exemple des routeurs, qui équipent de tels réseaux IP.

On entend ici par « équipement de réseau » tout équipement d'un réseau IP devant être associé à une adresse IP pour pouvoir être joint.

Comme le sait l'homme de l'art, les équipements de réseau, tels que les routeurs IP disposent d'interfaces de communication raccordées à des liens et joignables par des adresses IP différentes.

Dans un réseau de type IPv6 (IP version n°6), chaque adresse IPv6 est constituée d'un identifiant de réseau (généralement défini par 64 bits) et d'un identifiant d'interface (généralement défini par 64 bits). Une telle adresse se présente par exemple sous la forme «2001 :1d80 :ab58 :8451 : 8454:1100:aef0:8845, où les 64 bits les plus à gauche (2001 :1d80 :ab58 :8451) constituent l'identifiant de réseau, tandis que les 64 bits les plus à droite (8454:1100:aef0:8845) constituent l'identifiant d'interface.

Les identifiants d'interface sont destinés à permettre la différenciation des interfaces sur un même lien local. Chaque identifiant d'interface d'un routeur est habituellement déterminé par le routeur lui même au moyen de son adresse MAC, lorsqu'il est mis en fonctionnement.

Les identifiants de réseau sont destinés à désigner (adresser) un lien sur le réseau. Ils sont constitués à partir d'un préfixe réseau (noté « /n »), défini, par exemple, par les 48 bits de gauche de poids les plus forts (noté dans ce cas, de façon abrégée, « /48 » (n=48)) et définissant une famille d'adresses. Le préfixe réseau /n est fourni par le réseau (généralement par un serveur de préfixes réseau) et représente habituellement 2⁽⁶⁴⁻ⁿ⁾ identifiants de réseau différents. Il sert donc de « réserve » pour générer d'autres identifiants de réseau.

Par exemple, un préfixe réseau global /48, tel que 2001 :458 :1125 ::/48, peut permettre de définir les identifiants de réseau 2001 :458 :1125 :0000::/51, jusqu'à 2001 :458 :1125:E000::/51, qui constituent huit (2³) préfixes de type /51 pouvant à leur tour servir de réserve pour constituer d'autres préfixes de type /54 et ainsi de suite. Dans cet exemple, « :: » représente une suite de zéros (0) successifs (par exemple, 2001 :458:1125:0000::/51 est équivalent à 2001 :458:1125:0000:0000: 0000 : 0000 :0000)

Dans les réseaux IPv6 dits à auto-configuration d'adresses sans état (ou « stateless address auto-configuration », définie par les normes RFC 2461 et RFC 2462 de l'IETF), chaque routeur est agencé de manière à fournir un identifiant de réseau à chaque terminal connecté à ses interfaces, grâce à un mécanisme appelé RA/RS (pour « Router Advertisement/Router Sollicitation » - signalement de routeur/sollicitation de routeur).

Pour ce faire, le routeur doit tout d'abord obtenir un préfixe réseau qui lui servira de ressource pour élaborer des identifiants de réseau pour les terminaux qui sont raccordés à ses interfaces. Pour obtenir un préfixe, un routeur peut faire appel à ce que l'homme de l'art appelle le mécanisme de « délégation de préfixes hiérarchisée » (ou HPD pour « Hierarchical Prefix Delegation »), qui est notamment décrit dans le document de l'IETF (« Internet Engineering Task Force ») « draft-bykim-ipv6-hpd-01.txt », ETRI, 15 février 2004, accessible à l'adresse Internet http://ietfreport.isoc.org/all-ids/draft-bykim-ipv6-hpd-01.txt.

Ce mécanisme consiste tout d'abord à attribuer un préfixe réseau global (/n), généralement de type /48, à un unique routeur, dit « routeur racine », de sorte qu'il dispose d'un espace d'adressage représenté par un préfixe réseau global qu'il peut « découper » (ou fragmenter ou encore diviser) en (sous-)préfixes de plus grande longueur (par exemple /51) et mettre à la disposition d'autres routeurs « aval » raccordés via des liens à ses propres interfaces. Chaque routeur aval peut alors à son tour découper en (sous-)préfixes d'encore plus grande longueur (par exemple /54) le (sous-)préfixe qui lui a été attribué par le routeur racine (« amont »), afin de les mettre à la disposition d'autres routeurs aval raccordés via des liens à ses propres interfaces, et ainsi de suite, de manière à constituer progressivement un arbre de délégation hiérarchique.

Dans les réseaux actuels, la politique de découpage (ou fragmentation) des (sous-)préfixes est arbitraire du fait qu'elle est fixée une fois pour toute. Plus précisément, chaque (sous-)préfixe ne peut être découpé qu'en huit préfixes (8 = 2³, car 51 - 48 = 54 - 51 = 3, par exemple), ou en d'autres termes la longueur d'un sous-préfixe est systématiquement augmentée de trois bits par rapport à la longueur du (sous-)préfixe dont il est issu (par exemple, un préfixe /48 est découpé en huit sous-préfixes /51).

En raison de ce découpage statique et arbitraire, un routeur ne peut attribuer des préfixes réseau (par délégation) qu'à un nombre invariant (égal à huit) de routeurs voisins, quel que soit le nombre total de ses routeurs voisins et quel que soit le nombre réel d'interfaces que comporte chacun de ses routeurs voisins (et donc quelles que soient les longueurs des préfixes dont ils ont réellement besoin).

Ce défaut d'adaptabilité, qui résulte du fait que les routeurs ne connaissent pas certaines au moins des caractéristiques de configuration de leurs routeurs voisins, peut s'avérer particulièrement gênant dans certaines situations.

Troan et al. in "ipv6 Prefix Options for Dynamic Host Configuration Protocol" version 6" IETF Standard, Internet Engineering Task Force décembre 2003, XP015009415 décrit un dispositif conforme au préambule de la revendication 1.

L'invention a donc pour but de remédier à l'inconvénient induit par la politique arbitraire de découpage des préfixes réseau en sous-préfixes, tant dans les réseaux à délégation de préfixes hiérarchisée (ou HPD) que dans les réseaux à configuration dynamique d'hôte (ou DHCP pour « Dynamic Host Configuration Protocol »).

Elle propose à cet effet un dispositif, dédié à l'attribution de préfixes pour des équipements de réseau d'un réseau IP, et comprenant des moyens de traitement chargés, lorsqu'ils reçoivent une demande d'attribution de préfixe d'une longueur L(R) pour un équipement de réseau, de déterminer, par exemple dans une structure de données de type arbre binaire, un préfixe Pj non alloué de longueur L(Pj) égale à L(R) - m, m≥0, afin soit d'attribuer ce préfixe à l'équipement de réseau si la valeur de m est égale à 0, soit, si la valeur de m est supérieure à 0, d'effectuer successivement m boucles consistant chacune à fragmenter le préfixe courant P en deux préfixes P1 et P2 de longueurs égales à L(P) + 1 puis à choisir l'un des deux préfixes P1 et P2 comme préfixe en cours pour la boucle suivante, jusqu'à l'obtention lors de la dernière des m boucles de deux préfixes de longueurs égales à L(R), puis le choix de l'un d'entre eux pour l'attribuer à l'équipement de réseau.

On entend ici par « attribution » aussi bien une allocation directe de préfixe qu'une réservation de préfixe aboutissant à une allocation définitive du préfixe réservé en cas de confirmation de réservation. Par ailleurs, la variable « m » désigne ici le nombre de boucles de fragmentation à effectuer, et donc le nombre de divisions par deux que l'on doit appliquer au préfixe courant P.

Le dispositif selon l'invention peut comporter d'autres caractéristiques qui peuvent être prises séparément ou en combinaison, et notamment :
- ses moyens de traitement peuvent être chargés de déterminer le préfixe parmi un ensemble de préfixes ;
   ➢ cet ensemble de préfixes peut par exemple ne comprendre que des préfixes qui n'ont pas été attribués ;
      - les moyens de traitement peuvent alors être agencés de manière à déterminer le préfixe Pj non attribué de longueur L(Pj) égale à L(Rk) - m, et dont la valeur de m associée est la plus petite valeur possible positive ou nulle. Minimiser la valeur de m signifie fragmenter au minimum l'espace d'adressage total initial ;
      - en variante, les moyens de traitement peuvent être agencés de manière à déterminer le préfixe Pj non attribué de longueur L(Pj) égale à L(Rk) - m, et qui est le premier noeud rencontré associé à une valeur de m positive ou nulle ;
- une mémoire dans laquelle les moyens de traitement peuvent stocker des données représentatives des préfixes de l'ensemble en correspondance d'une information temporelle représentative de leur date d'attribution ;
- en variante la mémoire peut être de type FIFO. Dans ce cas, les moyens de traitement y stockent des données représentatives des préfixes de l'ensemble en fonction de leur date d'attribution, les données les plus anciennes étant stockées en tête d'une pile de la mémoire FIFO ;
- les moyens de traitement peuvent être agencés pour stocker dans la mémoire des données représentatives des longueurs et/ou d'au moins une partie des préfixes ;
- ses moyens de traitement peuvent être agencés pour concaténer un bit de valeur 0 à droite du préfixe P en cours de manière à constituer le préfixe P1 et pour concaténer un bit de valeur 1 à droite du préfixe P en cours de manière à constituer le préfixe P2 ;
   ➢ cette partie de préfixe est par exemple constituée de la suite de valeurs des bits de poids faibles concaténés, lors de fragmentations successives, à droite du préfixe de plus petite longueur dit racine ;
- ses moyens de traitement peuvent être agencés pour choisir en premier l'un des deux préfixes P1 et P2, toujours le même (par exemple P2), puis l'autre (par exemple P1) lorsque le premier n'est pas disponible ;
- lorsque les demandes d'attribution sont des demandes de réservation de préfixe à allouer, les moyens de traitement peuvent être chargés, une fois qu'ils ont attribué un préfixe, de déclencher une temporisation d'une durée choisie afin d'allouer le préfixe attribué lorsqu'ils reçoivent une confirmation de réservation avant que la durée choisie ne soit écoulée ;
   par exemple, lorsque les moyens de traitement n'ont pas reçu de confirmation de réservation avant que la durée choisie ne soit écoulée, ils peuvent supprimer de la mémoire au moins les données qui sont représentatives du préfixe qui avait été attribué en vue d'une réservation ;
      - les moyens de traitement peuvent être également agencés, lorsqu'un préfixe père se libère consécutivement à la suppression des données d'un préfixe qui était l'un des deux préfixes issus de la fragmentation du préfixe père, pour supprimer de la mémoire les données qui sont représentatives du préfixe père.

L'invention propose également un équipement de réseau de type routeur, pour un réseau IP à auto-configuration d'adresses, équipé d'un dispositif de gestion du type de celui présenté ci-avant.

L'invention propose également un serveur centralisé, pour un réseau IP à configuration dynamique d'hôte (DHCP), équipé d'un dispositif de gestion du type de celui présenté ci-avant.

L'invention est particulièrement bien adaptée, bien que de façon non exclusive, aux réseaux de type IPv6 et IPv4.

D'autres caractéristiques et avantages de l'invention apparaîtront à l'examen de la description détaillée ci-après, et des dessins annexés, sur lesquels :
- la figure 1 illustre de façon très schématique et fonctionnelle un routeur équipé d'un exemple de réalisation d'un dispositif d'attribution de préfixes selon l'invention,
- la figure 2 illustre de façon schématique le mécanisme de fragmentation de préfixe selon l'invention,
- la figure 3 illustre de façon schématique les conséquences de la fragmentation de préfixe de la figure 2 sur le préfixe réseau global P0 et sur son espace d'adressage initial EA,
- la figure 4 illustre de façon schématique un premier exemple d'arbre de délégation hiérarchique selon l'invention, après deux fragmentations selon l'invention,
- la figure 5 illustre de façon schématique les conséquences de la double fragmentation de préfixe de la figure 4 sur le préfixe réseau global P0 et sur son espace d'adressage initial EA,
- la figure 6 illustre de façon schématique un second exemple d'arbre de délégation hiérarchique selon l'invention, après quatre fragmentations selon l'invention.

Les dessins annexés pourront non seulement servir à compléter l'invention, mais aussi contribuer à sa définition, le cas échéant.

L'invention a pour objet de permettre l'attribution dynamique et non arbitraire de préfixes en fonction des besoins des équipements de réseau d'un réseau IP.

Dans ce qui suit, on considère à titre d'exemple non limitatif que les équipements de réseau sont des routeurs.

Un réseau IP peut être de façon très schématique, mais néanmoins suffisante à la compréhension de l'invention, assimilé à des groupes interconnectés de routeurs (R) couplés les uns aux autres de manière à communiquer entre eux via des liens locaux auxquels sont raccordées leurs interfaces de communication li une fois qu'elles ont été configurées à cet effet.

On entend ici par « lien local » une voie de communication, comme par exemple un lien ethernet, à laquelle sont raccordés des routeurs par l'une de leurs interfaces de communication (l).

Dans ce qui suit, on considère à titre d'exemple non limitatif que le réseau de communication est un réseau de type IPv6. Mais l'invention n'est pas limitée à ce type de réseau. Elle concerne en effet tous les réseaux IP requérant une attribution dynamique de préfixes de longueurs variables en fonction des besoins et notamment les réseaux de type IPv4.

Il est rappelé que dans un réseau IPv6 une adresse (IPv6) comporte 128 bits, les 64 bits les plus à gauche constituant l'identifiant de réseau et les 64 bits les plus à droite constituant l'identifiant d'interface.

Comme indiqué dans la partie introductive, les identifiants d'interface sont déterminés par chaque routeur, pour ses propres interfaces I, au moyen de leurs adresses MAC. Ils permettent ainsi de différencier les interfaces I des différents routeurs, raccordées à un même lien (local). Par ailleurs, les identifiants de réseau sont constitués à partir d'un préfixe réseau global de configuration occupant, par exemple, les 48 bits de poids les plus forts (noté /48). Ce préfixe réseau global est par exemple fourni par un serveur de préfixes à l'un des routeurs R, dit « routeur racine » (ou « root router »). Il définit une famille d'adresses pour tous les routeurs voisins du routeur racine et pour tous les autres routeurs qui appartiennent au final à un même arbre de délégation hiérarchique.

On considère dans ce qui suit, à titre d'exemple non limitatif, que le réseau IPv6 est à auto-configuration d'adresses sans état (ou « stateless address auto-configuration », et donc qu'il utilise un protocole de délégation de préfixes hiérarchisée (ou HPD pour « Hierarchical Prefix Delegation »). Mais, l'invention n'est pas limitée à ce type d'attribution de préfixe et à ce protocole. Elle concerne également les réseaux à configuration dynamique d'hôte à état (ou DHCP pour « Dynamic Host Configuration Protocol »).

Contrairement à un réseau à configuration dynamique d'hôte (DHCP) dans lequel les préfixes sont attribués aux différents routeurs (de type DHCP) par un serveur centralisé, dans un réseau IPv6 à auto-configuration d'adresses sans état (HPD), les routeurs (de type HPD) du réseau s'attribuent entre eux leurs préfixes, hormis le préfixe global qui est généralement fourni par un serveur de préfixes au routeur racine.

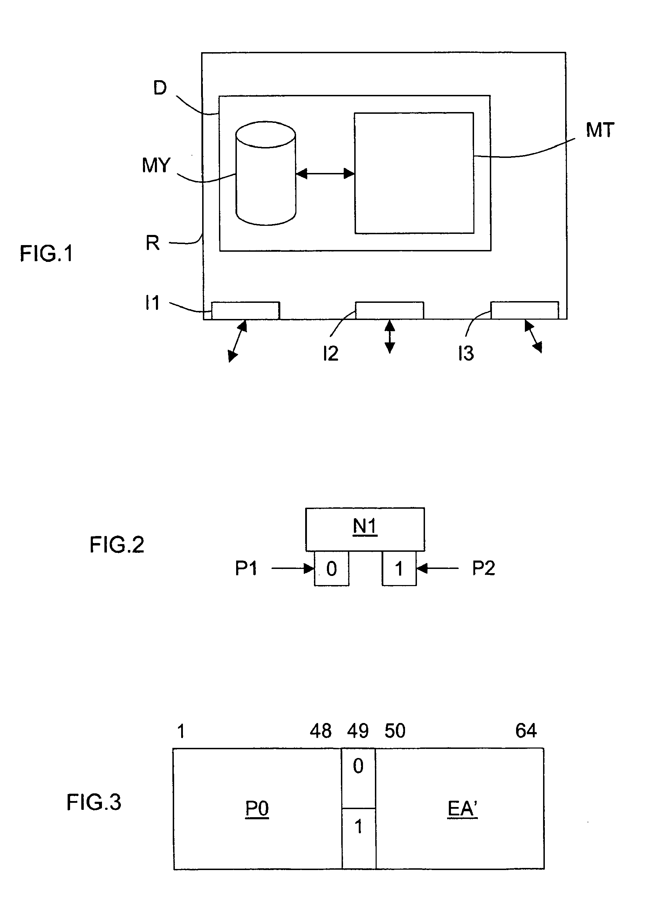

Pour permettre cette auto-attribution de préfixe, l'invention propose d'équiper certains au moins des routeurs R d'un réseau, et de préférence tous, d'un dispositif d'attribution de préfixes D, par exemple du type de celui illustré sur la figure 1.

Dans l'exemple illustré sur la figure 1, le dispositif selon l'invention D est implanté dans le routeur R. Mais cela n'est pas obligatoire. Le dispositif pourrait en effet être agencé sous la forme d'un boîtier (ou d'une carte électronique) destiné(e) à être raccordé(e) à un routeur.

Il est important de noter que dans le cas d'un réseau à configuration dynamique d'hôte (DHCP), le dispositif D peut être implanté dans (ou raccordé à) un serveur centralisé, chargé d'attribuer les préfixes aux différents routeurs. Un tel serveur centralisé peut lui-même faire partie d'un routeur.

Dans l'exemple illustré sur la figure 1, le routeur R comprend à titre purement illustratif trois interfaces I1 à I3. Mais, il peut comporter n'importe quel nombre d'interfaces li, dès lors que l'indice i est supérieur ou égal à 1.

Comme cela est schématiquement illustré sur la figure 1, un dispositif D selon l'invention comprend au moins un module de traitement MT chargé de déterminer un préfixe d'une longueur L(Rk) lorsqu'il reçoit une demande d'attribution de préfixe spécifiant ladite longueur L(Rk) d'un autre routeur Rk, éventuellement voisin.

Il est rappelé que dans un réseau IPv6 à auto-configuration d'adresses sans état (HPD) on appelle généralement « routeur de délégation de préfixe » (ou plus simplement « routeur délégué ») un routeur qui est chargé de déterminer un préfixe par un autre routeur qui en a besoin et qui est appelé « routeur requérant ». Chaque routeur Ri du réseau peut agir comme délégué pour l'attribution de (sous-)préfixes (fragmenté ou découpé) à certains routeurs Ri' et comme requérant auprès d'un routeur délégué pour se faire attribuer un sous-)préfixe (fragmenté ou découpé), qu'il peut ensuite éventuellement découper pour les besoins d'autres routeurs requérants.

De manière générale (c'est-à-dire dans un réseau HPD (hiérarchique) ou DHCP (centralisé)), une « demande d'attribution » peut être soit une demande d'allocation directe de préfixe (sans réservation), soit une demande de réservation de préfixe qui ne peut aboutir à une allocation définitive du préfixe réservé qu'en cas de demande de confirmation de réservation.

A réception d'une demande d'attribution de préfixe de longueur L(Rk), le module de traitement MT détermine tout d'abord un noeud Nj associé à un préfixe Pj non alloué de longueur L(Pj) égale à L(Rk) - m, m étant un entier positif ou nul.

Si la valeur de m est égale à 0, cela signifie qu'il existe un préfixe Pj non alloué dont la longueur L(Pj) est égale à la longueur de préfixe L(Rk) demandée par le routeur requérant Rk. Dans ce cas, le module de traitement MT attribue (réserve ou alloue) le préfixe Pj (du noeud Nj) au routeur requérant Rk.

Par contre, si la valeur de m est supérieure à 0, cela signifie qu'il existe un préfixe Pj non alloué dont la longueur L(Pj) est égale à la longueur de préfixe L(Rk) augmentée de m, demandée par le routeur requérant Rk. Dans ce cas, le module de traitement MT effectue successivement m boucles consistant chacune à fragmenter (ou diviser ou découper) le préfixe courant P en deux préfixes P1 et P2 de longueurs égales à L(P) + 1, puis à choisir l'un des deux préfixes P1 et P2 (d'abord l'un des deux, par exemple par convention P2, puis P1 si P2 ne peut pas être choisi) comme préfixe en cours pour la boucle suivante, jusqu'à l'obtention lors de la dernière des m boucles de deux préfixes de longueurs égales à L(R), puis le choix de l'un d'entre eux pour l'attribuer au routeur.

Par définition, le préfixe courant P est celui qui fait l'objet d'une fragmentation en deux parties P1 et P2 dans une boucle donnée.

Le mécanisme de fragmentation est illustré schématiquement sur la figure 2. Il consiste par exemple à concaténer un bit de valeur 0 à droite du préfixe courant P de manière à constituer le préfixe P1 et à concaténer un bit de valeur 1 à droite du préfixe courant P de manière à constituer le préfixe P2. En d'autres termes, un préfixe P1 est constitué des bits du préfixe courant P et d'un bit additionnel de valeur 0 concaténé à la droite de ce dernier, tandis qu'un préfixe P2 est constitué des bits du préfixe courant P et d'un bit additionnel de valeur 1 concaténé à la droite de ce dernier.

Par exemple, comme illustré sur la figure 3, si le préfixe courant P=P0 est de type /48, ce qui correspond à une longueur L(P)=48 bits (bits 1 à 48) et à un espace d'adressage EA égal à 16 bits (bits 49 à 64), les deux préfixes P1 et P2 qui résultent de sa fragmentation sont de type /49, ce qui correspond à une longueur L(P)=49 bits (bits 1 à 49) et à un espace d'adressage EA' égal à 15 bits (bits 50 à 64).

Le module de traitement MT peut choisir systématiquement, lors de chaque boucle, le préfixe P2 pour l'utiliser lors de l'éventuelle boucle suivante ou pour l'attribuer au routeur requérant Rk si sa longueur est égale à L(Rk). Bien entendu, on pourrait également choisir systématiquement le préfixe P1 ou bien choisir à chaque boucle l'un des deux préfixes P1 et P2 de toute autre manière adaptée.

Le choix du noeud Nj associé à un préfixe Pj non alloué de longueur L(Pj) égale à L(Rk) - m peut se faire de différentes manières.

Une première manière consiste à choisir comme noeud Nj le routeur délégué Rj ayant reçu la demande d'attribution d'un routeur requérant Rk. Le préfixe Pj qui est associé au noeud Nj est alors le préfixe qui a été précédemment attribué au routeur délégué Rj par le serveur de préfixes s'il s'agit du routeur racine ou par un autre routeur. Dans ce cas, la valeur de m est strictement supérieure à 0, et le module de traitement MT effectue une ou plusieurs boucles pour déterminer le préfixe de longueur L(Rk).

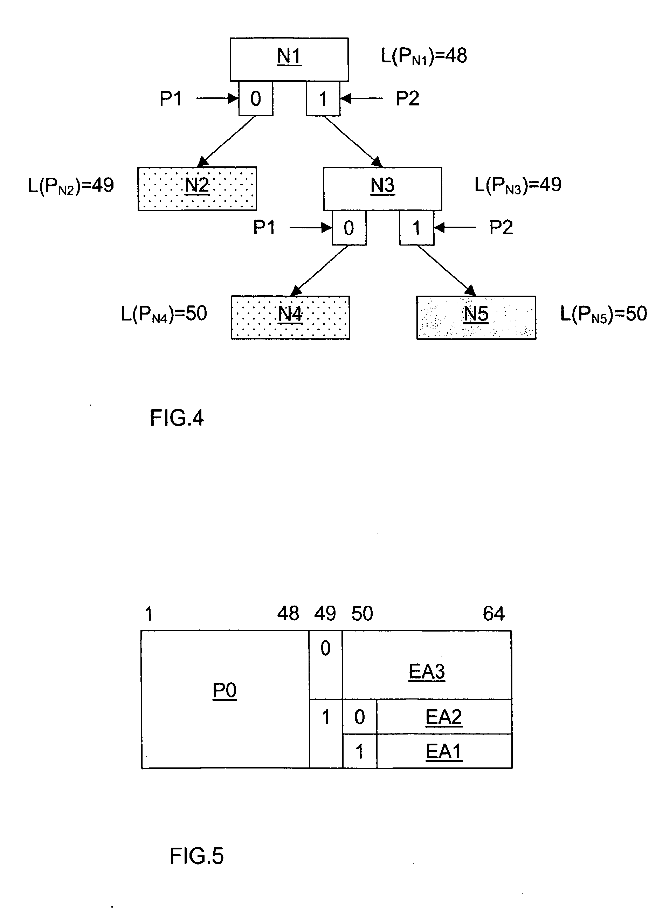

Par exemple et comme illustré sur les figures 4 et 5, le routeur délégué Rj peut être le routeur racine qui dispose d'un préfixe Pj de longueur L(Pj) égale à 48, et le routeur requérant Rk peut avoir besoin d'un préfixe Pk de longueur L(Pk) égale à 50.

Dans cette situation m=2, si bien que le module de traitement MT va devoir effectuer deux boucles de fragmentation pour constituer un préfixe Pk de longueur égale à 50 bits à partir du préfixe Pj de longueur égale à 48 bits.

Lors de la première boucle de fragmentation, le module de traitement MT fragmente le préfixe courant P=Pj du routeur Rj, qui correspond sur la figure au noeud N1, en deux parties qui constituent alors les préfixes P1 (Pj+0) et P2 (Pj+1) de longueurs égales à L(Pj) + 1, soit 49 bits. Ces deux préfixes P1 et P2, générés lors de la première boucle, correspondent respectivement aux noeuds N2 et N3, et présentent des longueurs respectives L(P_{N2}) et L(P_{N3}) égales à 49 bits.

Il est important de noter que ces préfixes P1 et P2 ne sont pas attribués (cela résulte de la différence entre une « division » au niveau d'un noeud (partiellement) interne de l'arbre et un « préfixe » qui concerne toujours une « feuille »).

Par exemple, le préfixe P1 reste disponible, en vue de future(s) attribution(s), moyennant d'éventuelle(s) fragmentation(s), tandis que le préfixe P2 est utilisé en tant que préfixe courant P par le module de traitement MT lors de la seconde boucle de fragmentation.

Lors de la seconde boucle de fragmentation, le module de traitement MT fragmente le préfixe courant P=P_{N3}, associé au noeud N3, en deux parties qui constituent alors les préfixes P1 (P_{N3}+0=Pj+1+0) et P2 (P_{N3}+1=Pj+1+1) de longueurs égales à L(P_{N3}) + 1, soit 50 bits. Ces deux préfixes P1 et P2, générés lors de la seconde boucle, correspondent respectivement aux noeuds N4 et N5, et présentent des longueurs respectives L(P_{N4}) et L(P_{N5}) égales à 50 bits.

Les préfixes P1 et P2 résultant de la seconde boucle étant de longueur égale à L(Rk), soit 50 bits, le module de traitement MT peut donc attribuer l'un d'entre eux au routeur requérant Rk, l'autre restant disponible, en vue de future(s) attribution(s), moyennant d'éventuelle(s) fragmentation(s). Par exemple, et comme illustré sur les figures 4 et 5, le module de traitement MT choisit le noeud N5 afin d'attribuer le préfixe associé P2=P_{N5} au routeur requérant Rk, le préfixe P1=P_{N4} associé au noeud N4 demeurant disponible.

Ce préfixe P_{N5}, égal à Pj+1+1, est alors transmis par le routeur délégué Rj au routeur requérant Rk sous la forme d'un message HPD afin qu'il puisse configurer ses interfaces et déterminer à son tour, éventuellement, des préfixes de longueurs supérieures à la sienne (ici L(P_{N5})=50 bits) et d'espaces d'adressage plus petits pour d'autres routeurs requérants.

Dans l'arbre hiérarchisé illustré sur la figure 4, le noeud N5 est en gris car il représente un routeur Rk auquel a été attribué le préfixe P_{N5}=Pj+1+1, tandis que les noeuds N2 et N4 sont tachetés car leurs préfixes respectifs n'ont pas encore été attribués.

Par ailleurs comme illustré sur la figure 5, l'espace d'adressage EA1 correspondant au préfixe attribué P_{N5} est égal à 14 bits, l'espace d'adressage EA2 correspondant au préfixe non attribué P_{N4} est égal à 14 bits, et l'espace d'adressage EA3 correspondant au préfixe non attribué P_{N2} est égal à 15 bits.

Une seconde manière consiste à choisir le noeud Nj parmi un ensemble de noeuds dont l'un correspond au routeur délégué Rj ayant reçu la demande d'attribution d'un routeur requérant Rk.

Cet ensemble de noeud peut constituer une arborescence hiérarchisée dont le noeud racine est associé au routeur racine ou bien au routeur délégué Rj. Il peut également ne comprendre que des noeuds dont les préfixes n'ont pas encore été attribués, et qui de ce fait ne sont pas associés à des routeurs.

Les données représentatives des noeuds de l'ensemble peuvent être stockées dans une mémoire MY. Lorsque les routeurs sont de type HPD et que le noeud racine de l'ensemble est le routeur délégué Rj dans lequel est implanté le dispositif D, la mémoire MY fait préférentiellement partie dudit dispositif D. Mais, on peut envisager que cette mémoire MY soit implantée dans un serveur centralisé ou bien dans le routeur racine, notamment lorsque le noeud racine de l'ensemble est le routeur racine ou bien que le réseau est de type DHCP.

Parmi les données des noeuds Nm, qui sont stockées dans la mémoire MY, on peut notamment citer celles qui sont représentatives de la longueur L(P_{Nm}) du préfixe P_{Nm} associé.

Ces données de longueur (L(P_{Nm})) peuvent être stockées en correspondance d'autres données, comme par exemple tout ou partie du préfixe associé (P_{Nm}). Lorsque l'on connaît le préfixe qui est associé au noeud racine d'un ensemble, il n'est pas nécessaire de stocker l'intégralité des préfixes issus de sa fragmentation selon l'invention. On peut en effet se contenter de stocker pour un noeud donné la suite des valeurs des bits qui ont été concaténés au préfixe du noeud racine, lors des boucles de fragmentation successives, pour définir ce noeud. On peut même envisager de ne stocker que les suites de valeurs de bits concaténés puisqu'elles sont représentatives des longueurs des préfixes correspondants.

On peut également envisager de stocker des données d'informations temporelles représentatives des dates d'attribution des préfixes. Au lieu de stocker de telles données d'informations temporelles, on peut utiliser une mémoire MY de type FIFO (« First In First Out »). Dans ce cas, les données (comme par exemple les longueurs de préfixes et/ou les suites de valeurs de bits concaténés) qui sont les plus anciennes sont stockées en tête de la pile de la mémoire FIFO, et les premiers noeuds qui peuvent faire l'objet d'une extraction de la mémoire FIFO sont ceux dont les données sont stockées en tête de la pile. On reviendra plus loin sur cette possibilité.

Les données sont par exemple stockées dans la mémoire MY sous la forme d'une structure de données de type arbre binaire. Cela est avantageux du fait que l'on part d'un espace d'adressage unique et que l'on procède à des divisions (ou fragmentations) par deux (2) de façon hiérarchique.

Quel que soit le mode de stockage, le module de traitement MT détermine parmi l'ensemble de noeuds dont les données sont stockées, un noeud Nj qui est associé au préfixe Pj non attribué dont la longueur L(Pj) est égale à L(Rk) - m, et dont la valeur de m associée est positive ou nulle.

Dans un premier mode de réalisation, le module de traitement MT peut choisir comme noeud Nj de départ, parmi l'ensemble de noeuds, celui dont la valeur de m est positive ou nulle et qu'il rencontre en premier lorsqu'il lit le contenu de la mémoire MY.

Cette solution n'est pas optimale en terme de nombre de préfixes attribués, du fait qu'elle peut entraîner la fragmentation de préfixes de petites longueurs (et donc disposant d'un grand espace d'adressage), alors même que d'autre préfixes de plus grandes longueurs (disposant d'un plus petit espace d'adressage) et satisfaisant à la même condition (m≥0) sont disponibles.

Il est donc préférable d'envisager un second mode de réalisation (améliorant le premier) dans lequel le module de traitement MT choisit comme noeud Nj de départ celui qui correspond à la valeur de m qui présente la plus petite valeur possible positive ou nulle parmi tous les noeuds de l'ensemble dont les données sont stockées dans la mémoire MY.

Dans ce cas, le module de traitement MT détermine tout d'abord dans la mémoire MY tous les noeuds qui correspondent à une valeur de m supérieure ou égale à 0, en comparant leur longueur de préfixe à la longueur L(Rk). Puis, il détermine parmi ces noeuds celui (ou ceux) qui correspond(ent) à la plus petite valeur de m possible. S'il existe plusieurs noeuds candidats, le module de traitement MT en choisit un, par exemple de façon aléatoire.

Le préfixe Pj non attribué, qui est associé au noeud choisi, que l'on désigne ici par Nj, est alors utilisé par le module de traitement MT pour déterminer le préfixe P(Rk) de longueur L(Rk). Comme indiqué précédemment, si la longueur L(Pj), du préfixe P(j) associé au noeud choisi Nj, est égale à L(Rk), la valeur de m est alors égale à 0 et le module de traitement MT attribue le préfixe Pj au routeur requérant Rk. Par contre, si la longueur L(Pj), du préfixe P(j) associé au noeud choisi Nj, est égale à L(Rk) - m, alors le module de traitement MT doit effectuer m boucles de fragmentation en utilisant Pj comme préfixe courant P lors de la première boucle.

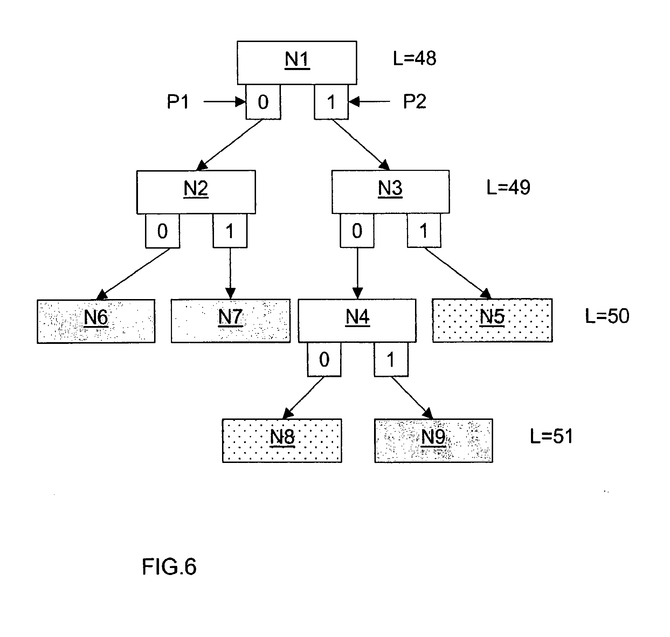

Un exemple de mise en oeuvre du second mode de réalisation va maintenant être décrit en référence à la figure 6.

Dans cet exemple, l'arbre hiérarchique est constitué de neuf noeuds N1 à N9.

Le noeud racine N1 représente, ici, le routeur racine Rj qui est associé au préfixe Pj de longueur L(Pj)=L(P_{N1})=48 bits.

Les noeuds N2 et N3 résultent d'une précédente fragmentation du préfixe N1 et sont respectivement associés à des préfixes P_{N2} et P_{N3} de longueurs L(P_{N2})=L(P_{N3})=49 bits.

Les noeuds N6 et N7 résultent d'une précédente fragmentation du préfixe N2 et sont respectivement associés à des préfixes P_{N6} et P_{N7} de longueurs L(P_{N6})=L(P_{N7})=50 bits. Par ailleurs, les noeuds N6 et N7 sont en gris car ils représentent tous les deux des routeurs auxquels ont été attribués les préfixes P_{N6}=Pj+0+0 et P_{N7}= Pj+0+1.

Les noeuds N4 et N5 résultent d'une précédente fragmentation du préfixe N3 et sont respectivement associés à des préfixes P_{N4} et P_{N5} de longueurs L(P_{N4})=L(P_{N5})=50 bits. Le noeud N5 est tacheté car son préfixe n'a pas encore été attribué.

Les noeuds N8 et N9 résultent d'une précédente fragmentation du préfixe N4 et sont respectivement associés à des préfixes P_{N8} et P_{N9} de longueurs L(P_{N8})=L(P_{N9})=51 bits. Le noeud N8 est tacheté car son préfixe n'a pas encore été attribué. Le noeud N9 est en gris car il représente un routeur auquel a été attribué le préfixe P_{N9}=Pj+1+0+1.

Dans cet exemple d'arbre hiérarchisé, résultant d'au moins quatre fragmentations, l'ensemble de noeuds dont les préfixes n'ont pas été attribués est donc constitué des noeuds N5 et N8. Par conséquent, lorsque le module de traitement MT du routeur délégué Rj reçoit une demande d'attribution de préfixe d'un routeur requérant Rk, il accède à la mémoire MY afin de rechercher parmi les données des noeuds N5 et N8 celles qui correspondent à la condition sur la valeur de m.

Par exemple, si la longueur L(Rk) requise par le routeur requérant Rk est égale à 50 bits, le module de traitement MT peut immédiatement attribuer au routeur requérant Rk le préfixe P_{N5} associé au noeud N5 puisqu'il est disponible.

Maintenant, si la longueur L(Rk) requise par le routeur requérant Rk est égale à 52 bits, le module de traitement MT ne peut que prendre le préfixe P_{N8} non attribué et associé au noeud N8 comme préfixe courant P pour l'unique boucle de fragmentation à effectuer (ici m=L(Rk)-L(P_{N8})=1). II fragmente donc le préfixe courant P_{N8} en deux parties, ce qui donne deux préfixes P1 et P2 de longueurs égales à 52 bits. Puis, il choisit l'un des deux préfixes P1 et P2, par exemple P2, pour l'attribuer au routeur requérant Rk.

Préférentiellement, une fois que le module de traitement MT a attribué un préfixe consécutivement à une ou plusieurs fragmentations, il stocke dans la mémoire MY les données qui sont associées au noeud correspondant, ainsi que les éventuelles données qui sont associées au(x) autres noeud(s) résultant de la (des) fragmentation(s) et dont le(s) préfixe(s) n'a (n'ont) pas été attribué(s).

Lorsque l'allocation de préfixe se fait par réservation et confirmation de réservation, il est préférable que le module de traitement MT dispose d'une temporisation d'une durée choisie, destinée à rendre disponible chaque préfixe réservé mais n'ayant pas fait l'objet d'une confirmation de réservation.

Dans ce cas, lorsque le module de traitement MT attribue (c'est-à-dire réserve) un préfixe, il déclenche immédiatement la temporisation. S'il reçoit un message de confirmation de réservation du routeur requérant Rk avant l'écoulement complet de la durée de temporisation, il lui alloue le préfixe réservé. Dans le cas contraire, le préfixe est de nouveau disponible. Il est alors préférable que le module de traitement MT supprime de la mémoire MY non seulement les données du noeud dont le préfixe a été libéré, mais également les données de tous les noeuds qui étaient associés à des préfixes « père » (par rapport au noeud libéré) et qui se retrouvent associés à des préfixes non attribués.

On entend ici par « noeud père » un noeud dont le préfixe père a fait l'objet d'une fragmentation en deux préfixes P1 et P2. Par exemple sur la figure 6 le noeud N4 est un noeud père par rapport aux noeuds N8 et N9. Ainsi, si le préfixe P_{N9} associé au noeud N9 se libère, alors les deux préfixes P_{N8} et P_{N9} issus de la fragmentation de P_{N4} se retrouvent tous les deux non attribués, si bien que la fragmentation du noeud N4 n'a plus de raison d'être. Le préfixe P_{N5} associé au noeud N5 étant par ailleurs non attribué, les deux préfixes P_{N4} et P_{N5} issus de la fragmentation de P_{N4} se retrouvent tous les deux non attribués, si bien que la fragmentation du noeud N3 n'a plus de raison d'être. L'arbre hiérarchisé se retrouve alors avec les noeuds N1, N2, N3, N6 et N7, parmi lesquels seul le noeud N3 est associé à un préfixe non attribué de petite longueur (49 bits) et donc de grand espace d'adressage.

Le module de traitement MT va donc supprimer de la mémoire MY les données représentatives des noeuds N5 et N8 et stocker à la place des données représentatives du noeud N3.

Afin de faciliter au module de traitement MT la recherche dans un arbre hiérarchisé des noeuds dont les préfixes n'ont pas fait l'objet d'une confirmation pendant la durée de temporisation, il est possible, comme indiqué précédemment, de stocker leurs données en correspondance de données d'informations temporelles représentatives de leurs dates d'attribution (de réservation) respectives. On peut également utiliser une mémoire de type FIFO dans laquelle les données les plus anciennes sont stockées en tête de pile. Ainsi, les noeuds qui peuvent faire l'objet d'une extraction de la mémoire FIFO sont ceux dont les données sont stockées en tête de la pile ce qui évite d'avoir à analyser toute la mémoire MY.

Une gestion similaire de la mémoire MY peut être envisagée pour tenir compte des routeurs retirés du réseau et associés à des noeuds d'un arbre hiérarchisé.

Le dispositif d'attribution de préfixes D selon l'invention, et notamment son module de traitement MT ainsi qu'éventuellement sa mémoire MY, peuvent être réalisés sous la forme de circuits électroniques, de modules logiciels (ou informatiques), ou d'une combinaison de circuits et de logiciels.

L'invention ne se limite pas aux modes de réalisation de dispositif d'attribution de préfixes, d'équipement de réseau (tel qu'un routeur), et de serveur décrits ci-avant, seulement à titre d'exemple, mais elle englobe toutes les variantes que pourra envisager l'homme de l'art dans le cadre des revendications ci-après.

## Revendications

1. Dispositif d'attribution de préfixes pour des équipements de réseau (Ri) d'un réseau de communication à protocole Internet, ledit dispositif comprenant des moyens de traitement (MT) agencés pour, en cas de demande d'attribution d'un préfixe d'une longueur L(Rk) pour un équipement de réseau (Rk), déterminer un préfixe (Pj) non alloué et attribuer ce préfixe audit équipement de réseau (Rk), **caractérisé en ce que** lesdits moyens de traitement (MT) sont agencés pour, soit attribuer ce préfixe audit équipement de réseau (Rk) si la longueur L(Pj) dudit préfixe (Pj) non alloué est égale à L(Rk), soit, si la longueur L(Pj) dudit préfixe (Pj) non alloué est égale à L(Rk) - m, où la valeur de m est supérieure à 0, effectuer successivement m boucles consistant chacune à fragmenter le préfixe courant (P) en deux préfixes (P1 et P2) de longueurs égales à L(P) + 1 puis à choisir l'un des deux préfixes (P1 et P2) comme préfixe en cours pour la boucle suivante, jusqu'à l'obtention lors de la dernière desdites m boucles de deux préfixes de longueurs égales à L(Rk), puis choisir l'un d'entre eux pour l'attribuer audit équipement de réseau (Rk).

2. Dispositif selon la revendication 1, **caractérisé en ce que** lesdits moyens de traitement (MT) sont agencés pour déterminer ledit préfixe (Pj) parmi un ensemble de préfixes (Pj).

3. Dispositif selon la revendication 2, **caractérisé en ce que** ledit ensemble ne comprend que des préfixes non attribués.

4. Dispositif selon la revendication 3, **caractérisé en ce que** lesdits moyens de traitement (MT) sont agencés pour déterminer ledit préfixe (Pj) non attribué de longueur L(Pj) égale à L(Rk) - m, et dont la valeur de m associée est la plus petite valeur possible positive ou nulle.

5. Dispositif selon la revendication 3, **caractérisé en ce que** lesdits moyens de traitement (MT) sont agencés pour déterminer ledit préfixe (Pj) non attribué de longueur L(Pj) égale à L(Rk) - m, et qui est le premier préfixe rencontré associé à une valeur de m positive ou nulle.

6. Dispositif selon l'une des revendications 1 à 5, **caractérisé en ce qu'**il comprend une mémoire (MY) dans laquelle lesdits moyens de traitement (MT) sont propres à stocker des données représentatives des préfixes dudit ensemble en correspondance d'une information temporelle représentative de leur date d'attribution.

7. Dispositif selon l'une des revendications 1 à 5, **caractérisé en ce qu'**il comprend une mémoire (MY) de type FIFO dans laquelle lesdits moyens de traitement (MT) sont propres à stocker des données représentatives des préfixes dudit ensemble en fonction de leur date d'attribution, lesdites données les plus anciennes étant stockées en tête d'une pile de ladite mémoire (MY).

8. Dispositif selon l'une des revendications 6 et 7, **caractérisé en ce que** lesdits moyens de traitement (MT) sont agencés pour stocker dans ladite mémoire (MY) des données représentatives des longueurs et/ou d'au moins une partie des préfixes.

9. Dispositif selon l'une des revendications 6 à 8, **caractérisé en ce que** lesdites données sont stockées dans la mémoire (MY) sous la forme d'une structure de données de type arbre binaire.

10. Dispositif selon l'une des revendications 1 à 9, **caractérisé en ce que** lesdits moyens de traitement (MT) sont agencés pour concaténer un bit de valeur 0 à droite du préfixe (P) en cours de manière à constituer un premier préfixe (P1) et pour concaténer un bit de valeur 1 à droite du préfixe (P) en cours de manière à constituer un second préfixe (P2).

11. Dispositif selon la revendication 8, **caractérisé en ce que** lesdites données sont stockées dans la mémoire (MY) sous la forme d'une structure de données de type arbre binaire et que ladite partie est constituée de la suite de valeurs de bits de poids faibles concaténés, lors de fragmentations successives, à droite du préfixe de plus petite longueur dit racine de la structure de données de type arbre binaire.

12. Dispositif selon l'une des revendications 1 à 11, **caractérisé en ce que** lesdits moyens de traitement (MT) sont agencés pour choisir systématiquement en premier l'un des deux préfixes (P1 et P2), toujours le même, puis l'autre lorsque le premier n'est pas disponible.

13. Dispositif selon l'une des revendications 1 à 12, **caractérisé en ce que** lesdits moyens de traitement (MT) sont agencés pour traiter des demandes d'attribution agencées sous la forme de demandes d'allocation de préfixe.

14. Dispositif selon l'une des revendications 1 à 13, **caractérisé en ce que** lesdits moyens de traitement (MT) sont agencés pour traiter des demandes d'attribution agencées sous la forme de demandes de réservation de préfixe à allouer.

15. Dispositif selon la revendication 14, **caractérisé en ce que** lesdits moyens de traitement (MT) sont agencés, après avoir attribué un préfixe, pour déclencher une temporisation d'une durée choisie de manière à allouer ledit préfixe attribué en cas de réception d'une confirmation de réservation avant que ladite durée choisie ne soit écoulée.

16. Dispositif selon l'une des revendications 6 à 9, **caractérisé en ce que** lesdits moyens de traitement (MT) sont agencés pour déclencher une temporisation d'une durée choisie après avoir attribué un préfixe, de manière à allouer ledit préfixe attribué en cas de réception d'une confirmation de réservation avant que ladite durée choisie ne soit écoulée, et pour supprimer de ladite mémoire (MY) au moins les données représentatives du préfixe attribué en vue d'une réservation, en l'absence de réception d'une confirmation de réservation avant que ladite durée choisie ne soit écoulée.

17. Dispositif selon la revendication 16, **caractérisé en ce que** lesdits moyens de traitement (MT) sont agencés, en cas de libération d'un préfixe père consécutivement à la suppression des données d'un des deux préfixes issus de la fragmentation dudit préfixe père, pour supprimer de ladite mémoire (MY) les données représentatives du préfixe père.

18. Equipement de réseau (R) pour un réseau de communication à protocole Internet et à auto-configuration d'adresses, **caractérisé en ce qu'**il comprend un dispositif d'attribution de préfixes (D) selon l'une des revendications précédentes.

19. Equipement de réseau selon la revendication 18, **caractérisé en ce qu'**il est agencé sous la forme d'un routeur.

20. Serveur pour un réseau de communication à protocole Internet et à configuration dynamique d'hôte, **caractérisé en ce qu'**il comprend un dispositif d'attribution de préfixes (D) selon l'une des revendications 1 à 17.

## Claims

1. A device for assigning prefixes for network equipments (Ri) of a communication network using Internet protocol, said device comprising processing means (MT) configured to, if a prefix having a length L(Rk) is requested for a network equipment (Rk), determining an unallocated prefix (Pj) and assigning that prefix to said network equipment (Rk), **characterized in that** said processing means (MT) are configured to either assign that prefix to said network equipment (Rk) if the length L(Pj) of said unallocated prefix (Pj) is equal to L(Rk), or, if the length L(Pj) of said unassigned prefix (Pj) is equal to L(Rk) - m, where the value of m is greater than 0, successively carrying out m loops each consisting of fragmenting the current prefix (P) into two prefixes (P1 and P2) whose lengths are equal to L(P) + 1 then choosing one of the two prefixes (P1 and P2) as the current prefix for the next loop, until two prefixes having lengths equal to L(Rk) are reached during the last of said m loops, then choosing one of them for assigning to said network equipment (Rk).

2. A device according to claim 1, **characterized in that** said processing means (MT) are configured to determine said prefix (Pj) from a set of prefixes (Pj).

3. A device according to claim 2, **characterized in that** said set only comprises unassigned prefixes.

4. A device according to claim 3, **characterized in that** said processing means (MT) are configured to determine said unassigned prefix (Pj) whose length L(Pj) is equal to L(Rk) — m, and whose associated value m is the smallest possible positive value or zero.

5. A device according to claim 3, **characterized in that** said processing means (MT) are configured to determine said unassigned prefix (Pj) whose length L(Pj) is equal to L(Rk) — m, and which is the first encountered prefix associated with a positive or zero value of m.

6. A device according to one of the claims 1 to 5, **characterized in that** it comprises a memory (MY) in which said processing means (MT) are capable of storing data representative of the prefixes of said set, matched up with a piece of time information representative of their date of assignment.

7. A device according to one of the claims 1 to 5, **characterized in that** it comprises a FIFO memory (MY) in which said processing means (MT) are capable of storing data representative of the prefixes of said set as a function of their date of allocation, said oldest data being stored at the top of a stack of said memory (MY).

8. A device according to one of the claims 6 and 7, **characterized in that** said processing means (MT) are configured to store in said memory (MY) data representative of the lengths and/or of at least part of the prefixes.

9. A device according to one of the claims 6 to 8, **characterized in that** said data is stored in the memory (MY) in the form of a binary tree data structure.

10. A device according to one of the claims 1 to 9, **characterized in that** said processing means (MT) are configured to concatenate a bit whose value is 0 to the right of the current prefix (P) so as to constitute a first prefix (P1) and to concatenate a bit whose value is 1 to the right of the current prefix (P) so as to constitute a second prefix (P2).

11. A device according to claim 8, **characterized in that** said data is stored in the memory (MY) in the form of a binary tree data structure and that said part is made up of the sequence of least-significant bit values concatenated, during successive fragmentations, to the right of the shortest prefix, known as the root of the binary tree data structure.

12. A device according to one of the claims 1 to 11, **characterized in that** said processing means (MT) are configured to always first choose one of the two prefixes (P1 and P2), always the same one, and then the other when the first is not available.

13. A device according to one of the claims 1 to 12, **characterized in that** said processing means (MT) are configured to process assignment requests configured in the form of prefix allocation requests.

14. A device according to one of the claims 1 to 13, **characterized in that** said processing means (MT) are configured to process assignment requests configured in the form of to-be-allocated prefix reservation requests.

15. A device according to claim 14, **characterized in that** said processing means (MT) are configured, after having assigned a prefix, to trigger a time delay whose duration is chosen so as to allocate said assigned prefix in the event that a reservation confirmation is received before said chosen duration has passed.

16. A device according to one of the claims 6 to 9, **characterized in that** said processing means (MT) are configured to trigger a time delay with a chose duration after having assigned a prefix, so as to allocate said assigned prefix in the event that a reservation confirmation is received before said chosen duration has passed, and to delete from said memory (MY) at least the data representative of the assigned prefix with a view toward a reservation, in the absence of any receipt of a reservation confirmation before said chosen duration has passed.

17. A device according to claim 16, **characterized in that** said processing means (MT) are configured, if a parent prefix is freed up subsequent to the deletion of the data of one of the two prefixes derived from the fragmentation of said parent prefix, to delete from said memory (MY) the data representative of the parent prefix.

18. A network equipment (R) for a communication network using Internet protocol and address self-configuration, **characterized in that** it comprises a device for assigning prefixes (D) according to one of the preceding claims.

19. A network equipment according to claim 18, **characterized in that** it is configured in the form of a router.

20. A server for a communication network using Internet protocol and dynamic host configuration, **characterized in that** it comprises a device for assigning prefixes (D) according to one of the claims 1 to 17.

## Patentansprüche

1. Vorrichtung zur Zuweisung von Präfixen für Netzwerkvorrichtungen (Ri) eines Kommunikationsnetzwerks mit Internet-Protokoll, wobei die besagte Vorrichtung Verarbeitungsmittel (MT) umfasst, die dazu ausgelegt sind, im Fall einer Anforderung für die Zuweisung eines Präfixes einer Länge L(Rk) für eine Netzwerkvorrichtung (Rk) ein nicht zugeteiltes Präfix (Pj) zu bestimmen und dieses Präfix an die besagte Netzwerkvorrichtung (Rk) zuzuweisen, **dadurch gekennzeichnet, dass** die besagten Verarbeitungsmittel (MT) dazu ausgelegt sind, dieses Präfix entweder an die besagte Netzwerkvorrichtung (Rk) zuzuweisen, wenn die Länge (L(Pj) des besagten nicht zugeteilten Präfixes (Pj) gleich L(Rk) ist, oder, wenn die Länge (L(Pj) des besagten nicht zugeteilten Präfixes (Pj) gleich L(Rk) - m ist, wobei der Wert m größer als 0 ist, nacheinander m Schleifen auszuführen, darin bestehend, dass eine jede der Schleifen das aktuelle Präfix (P) in zwei Präfixe (P1 und P2) einer Länge von L(P) +1 fragmentiert, und anschließend eines der beiden Präfixe (P1 und P2) als aktuelles Präfix für die folgende Schleife auszuwählen, bis bei der letzten der besagten m Schleifen zwei Präfixe einer Länge von L(Rk) erhalten werden, und anschließend eines dieser Präfixe auszuwählen, um es an die besagte Netzwerkvorrichtung (Rk) zuzuweisen.

2. Vorrichtung nach Anspruch 1, **dadurch gekennzeichnet, dass** die besagten Verarbeitungsmittel (MT) dazu ausgelegt sind, das besagte Präfix (Pj) unter einer Menge von Präfixen (Pj) zu bestimmen.

3. Vorrichtung nach Anspruch 2, **dadurch gekennzeichnet, dass** die besagte Menge nur nicht zugewiesene Präfixe umfasst.

4. Vorrichtung nach Anspruch 3, **dadurch gekennzeichnet, dass** die besagten Verarbeitungsmittel (MT) dazu ausgelegt sind, das besagte nicht zugewiesene Präfix (Pj) einer Länge L(Pj) von L(Rk) - m, wobei der zugeordnete Wert m der kleinste mögliche positive Wert oder Null ist, zu bestimmen.

5. Vorrichtung nach Anspruch 3, **dadurch gekennzeichnet, dass** die besagten Verarbeitungsmittel (MT) dazu ausgelegt sind, das besagte nicht zugewiesene Präfix (Pj) einer Länge (L(Pj) von L(Rk) - m, welches das erste angetroffene Präfix ist, welches mit einem Wert m, entweder positiv oder gleich Null, assoziiert ist, zu bestimmen.

6. Vorrichtung nach einem der Ansprüche 1 bis 5, **dadurch gekennzeichnet, dass** sie einen Speicher (MY) umfasst, in welchem die besagten Verarbeitungsmittel (MT) dazu ausgelegt sind, Daten, die für die Präfixe der besagten Menge repräsentativ sind, entsprechend einer Zeitinformation, welche für deren Zuweisungsdatum repräsentativ ist, zu speichern.

7. Vorrichtung nach einem der Ansprüche 1 bis 5, **dadurch gekennzeichnet, dass** sie einen Speicher (MY) vom Typ FIFO umfasst, in welchem die besagten Verarbeitungsmittel (MT) dazu ausgelegt sind, Daten, die für die Präfixe der besagten Menge repräsentativ sind, gemäß deren Zuweisungsdatum zu speichern, wobei die ältesten der besagten Daten am Kopf eines Stapels des besagten Speichers (MY) gespeichert werden.

8. Vorrichtung nach einem der Ansprüche 6 und 7, **dadurch gekennzeichnet, dass** die besagten Verarbeitungsmittel (MT) dazu ausgelegt sind, Daten, welche für die Längen und/oder mindestens einen Teil der Präfixe repräsentativ sind, in dem besagten Speicher (MY) zu speichern.

9. Vorrichtung nach einem der Ansprüche 6 bis 8, **dadurch gekennzeichnet, dass** die besagten Daten in der Form einer Datenstruktur vom Typ eines binären Baums in dem Speicher (MY) gespeichert werden.

10. Vorrichtung nach einem der Ansprüche 1 bis 9, **dadurch gekennzeichnet, dass** die besagten Verarbeitungsmittel (MT) dazu ausgelegt sind, ein Bit mit einem Wert 0 am rechten Ende des aktuellen Präfixes (P) zu verketten, um ein erstes Präfix (P1) zu bilden, und ein Bit mit einem Wert 1 am rechten Ende des aktuellen Präfixes (P) zu verketten, um ein zweites Präfix (P2) zu bilden.

11. Vorrichtung nach Anspruch 8, **dadurch gekennzeichnet, dass** die besagten Daten in der Form einer Datenstruktur vom Typ eines binären Baums in dem Speicher (MY) gespeichert werden, und dass der besagte Teil aus der Folge der Werte von niedrigstwertigen Bits, die während der aufeinanderfolgenden Fragmentierungen am rechten Ende des Präfixes einer kleineren Länge, der sogenannten Wurzel der Datenstruktur vom Typ eines binären Baums, verkettet werden, besteht.

12. Vorrichtung nach einem der Ansprüche 1 bis 11, **dadurch gekennzeichnet, dass** die besagten Verarbeitungsmittel (MT) dazu ausgelegt sind, zuerst systematisch eines der zwei Präfixe (P1 und P2), und zwar immer dasselbe, zu wählen, und danach das andere, wenn das erste nicht verfügbar ist.

13. Vorrichtung nach einem der Ansprüche 1 bis 12, **dadurch gekennzeichnet, dass** die besagten Verarbeitungsmittel (MT) dazu ausgelegt sind, in der Form von Anforderungen für die Zuteilung eines Präfixes gestaltete Zuweisungsanforderungen zu verarbeiten.

14. Vorrichtung nach einem der Ansprüche 1 bis 13, **dadurch gekennzeichnet, dass** die besagten Verarbeitungsmittel (MT) dazu ausgelegt sind, in der Form von Anforderungen für die Reservierung eines zuzuteilenden Präfixes gestaltete Zuweisungsanforderungen zu verarbeiten.

15. Vorrichtung nach Anspruch 14, **dadurch gekennzeichnet, dass** die besagten Verarbeitungsmittel (MT) dazu ausgelegt sind, nach der Zuweisung eines Präfixes eine Verzögerung einer gewählten Dauer auszulösen, so dass das besagte im Fall des Empfangs einer Reservierungsbestätigung zugewiesene Präfix vor Ablauf der besagten gewählten Dauer zugeteilt wird.

16. Vorrichtung nach einem der Ansprüche 6 bis 9, **dadurch gekennzeichnet, dass** die besagten Verarbeitungsmittel (MT) dazu ausgelegt sind, nach der Zuweisung eines Präfixes eine Verzögerung einer gewählten Dauer auszulösen, so dass das besagte im Fall des Empfangs einer Reservierungsbestätigung zugewiesene Präfix zugeteilt wird, bevor die besagte gewählte Dauer abgelaufen ist, und zumindest die Daten, welche für das in Hinsicht auf eine Reservierung zugewiesene Präfix repräsentativ sind, aus dem besagten Speicher (MY) zu löschen, wenn vor Ablauf der besagten gewählten Dauer keine Reservierungsbestätigung empfangen wird.

17. Vorrichtung nach Anspruch 16, **dadurch gekennzeichnet, dass** die besagten Verarbeitungsmittel (MT) dazu ausgelegt sind, im Fall der Freigabe eines Vater-Präfixes im Anschluss an die Löschung der Daten eines der zwei aus der Fragmentierung des besagten Vater-Präfixes entstandenen Präfixe die Daten, welche für das Vater-Präfix repräsentativ sind, aus dem besagten Speicher (MY) zu löschen.

18. Netzwerkvorrichtung (R) für ein Kommunikationsnetzwerk mit Internet-Protokoll und Adressen-Autokonfiguration, **dadurch gekennzeichnet, dass** sie eine Vorrichtung zur Zuweisung von Präfixen (D) nach einem der vorstehenden Ansprüche umfasst.

19. Netzwerkvorrichtung nach Anspruch 18, **dadurch gekennzeichnet, dass** sie in der Form eines Routers gestaltet ist.

20. Server für ein Kommunikationsnetzwerk mit Internet-Protokoll und dynamischer Host-Konfiguration, **dadurch gekennzeichnet, dass** er eine Vorrichtung zur Zuweisung von Präfixen (D) nach einem der vorstehenden Ansprüche 1 bis 17 umfasst.
